# EUROPEAN PATENT APPLICATION

(11) **EP 1 662 719 A1**
(43) Date of publication of application: **31.05.2006**
(21) Application number: 04425875.4
(22) Date of filing: 24.11.2004
(51) Int. Cl.: H04L 12/56

(54) **Distributed-matrix cross-connector for synchronous networks**

(71) Applicant: SIEMENS AKTIENGESELLSCHAFT, 80333 München (DE)
(72) Inventor: Capezzali, Roberto, 67100 L'Aquila (IT)

(57) **Abstract**

A cross-connector (200) for synchronous digital networks, such as SDH/SONET networks, includes a plurality of input/output interfaces (6a...6n) each handling a plurality of incoming/outgoing digital streams. The interfaces are connected to a common bus (5), to which they access in time sharing, at instants determined by a timing card (7). An adaptation unit (63) on each card (6a...6n) provides for dividing the streams into data blocks (CSTM-1) with a format specific for transmission over the bus, inserting concurrent data blocks of all incoming streams into a common frame (DIF), and inserting each common frame into a time slot of a multiplexed frame (DMIF) transmitted over the bus (5).

## Description

### Field of the invention

The present invention refers to digital transmission networks, and more particularly it concerns an apparatus, such as a cross-connector, for receiving digital data streams from a plurality of interfaces, combining their contents in predetermined manner, and sending back the resulting data streams, after a switching thereof, to said interfaces.

Preferably, but not exclusively, the invention is applied to cross-connection of digital streams conforming to the synchronous digital hierarchy (SDH) or synchronous optical network (SONET) standards.

### Background of the invention

In digital communication networks like those based on the standards mentioned above, the data to be transmitted are inserted into special function blocks called "containers". These are extended by adding additional information (POH = Path Overhead) to form virtual containers VC-n (where n is an index related to the container capacity) and can in turn be combined again to form tributary units TU-n or higher order virtual containers and administrative units, which can be transmitted upon insertion into synchronous transport modules. A basic transport module STM-1 allows insertion of virtual containers of any order n and creates a transmission channel with a capacity of 155 Mbit/s (more precisely, 155.52 Mbit/s). An STM-1 comprises a frame with (in a two-dimensional representation) 9 rows and 270 columns, where each column corresponds to 1 byte, for a maximum data content of 19440 bits, and is transferred at a clock frequency of 8 KHz. Higher order transport modules (STM2, 4 ... 64 etc.) create channels with correspondingly multiple transmission rates.

Routing of the data streams within the network is performed through the so-called cross-connectors, which are devices that receive data streams from different interfaces, suitably combine the contents of such streams, and output the resulting data streams according to pre-determined switching rules, which remain fixed for a given network configuration.

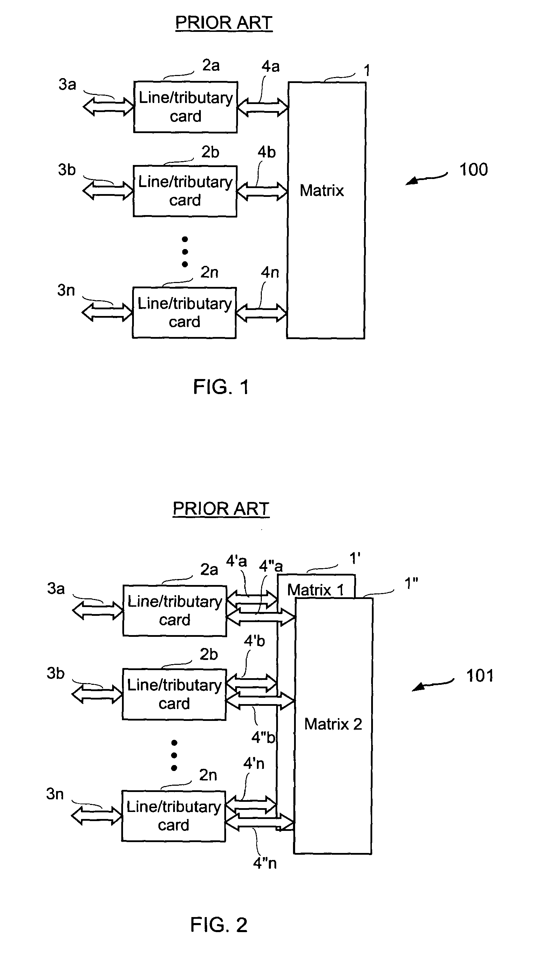

The usual approach to implement a cross-connector is to allocate the switching function on a dedicated chip, chipset, card or drawer usually referred to as the "matrix". This situation is shown for cross-connector 100 in Fig. 1. Matrix 1 (which may include space-division and time-division stages) is connected to a plurality of input/output interfaces (line/tributary cards) 2a, 2b...2n from which it receives the streams to be cross-connected, incoming to the interfaces through lines 3a...3n. Matrix 1 performs the switching function and sends the switched data streams back to interfaces 2a...2n for transmission over lines 3a...3n. Generally, each interface 2a...2n receives/emits a plurality of streams, even if for sake of simplicity only one input/output line 3a...3n has been shown for each interface. A fixed physical path 4a...4n is usually assigned to each data stream incoming to matrix 1, that is, every line/tributary interface 2a...2n is connected to matrix 1 through a respective incoming and outgoing dedicated path. So matrix 1 has to be equipped with a number of physical ports each statically connected to a port on the interfaces (space division access). Note also that, even if the interfaces are referred to as "cards" in the drawing, they may correspond to different constructive modules, like chipsets or drawers.

One of the features often required of cross-connectors is the protection of the data streams, that is, one or more or even all data paths passing through the cross-connector should survive in case of equipment failures due to mechanical or electrical problems or environmental accidents.

Protection is generally implemented through a hardware redundancy. In this case both the matrix and the physical paths connecting the matrix to the interfaces have to be duplicated. This is shown for cross-connector 101 in Fig. 2, where the elements shown also in Fig. 1 are denoted by the same reference numeral, with the addition of a prime or a double prime for the duplicated elements. This has an obvious impact on the cross-connector cost.

A partial solution to this problem is using a Random Access Memory (RAM) for implementing the switching, as disclosed in EP 0 993 711. However, the RAM still represents a concentration point which should be duplicated for protection purposes: even if duplicating a RAM is less expensive than duplicating an actual switching matrix, this still significantly adds to the cross-connector cost.

### Summary of the invention

It is an object of the invention to provide a cross-connector which obviates the drawbacks of the prior art solutions.

This is obtained, according to the invention, in that the input/output interfaces are all connected to a common bus, which is time shared among said input/output interfaces.

Thus, the switching carried out by the cross-connector is a time switching, instead of a space switching as in the prior art.

Preferred features of the invention are disclosed in claims 2 to 13.

Buses shared among multiple units are commonly used in communication networks. However generally the units have access to the bus according to either contention techniques or ordered access techniques, which are incompatible with the synchronism requirements of synchronous networks.

The invention also provides a method of cross-connection of digital streams, comprising the steps of:
- providing a bus connected to and time shared among a plurality of input/output interfaces;
- building, on said bus, a periodically repeating frame having a time slot for each interface;
- transmitting from each interface onto said bus, during the time slot allotted to said interface, concurrent data blocks of the streams incoming to the interface; and
- reading from said bus and loading into each said interface, during the corresponding time slot, data bytes to be inserted into streams outgoing from said interface.

### Brief description of the drawings

The invention will be better understood from the following description of a preferred embodiment, given by way of non limiting example, taken in conjunction with the accompanying drawings, in which:
- Fig. 1 is a block diagram of an unprotected cross-connector according to the prior art;
- Fig. 2 is a block diagram of a protected cross-connector according to the prior art;
- Fig. 3 is a block diagram of the cross-connector according to the invention;
- Fig. 4 is a block diagram of an input/output interface for the cross-connector of Fig. 3;
- Fig. 5 is a bidimensional representation of a conventional STM-1 frame;
- Fig. 6 is a bidimensional representation of a frame in bus matrix format;
- Fig. 7 is a time diagram of the frame shown in Fig. 6;
- Fig. 8 is a bidimensional representation of a multiplexed frame sent by a card to the matrix bus;
- Fig. 9 is a bidimensional representation of the frame built onto the matrix bus;
- Fig. 10 is a time diagram of the frame shown in Fig. 9; and
- Fig. 11 is a flow chart of the method of the invention.

### Detailed description of the invention

The invention will be now described in more detail with reference to the preferred application to an SDH network, and assuming that cross-connection takes place at the level of the STM-1 transport modules. Thus, frames with a period of 125 µs are considered.

Figs. 1 and 2 have been discussed above.

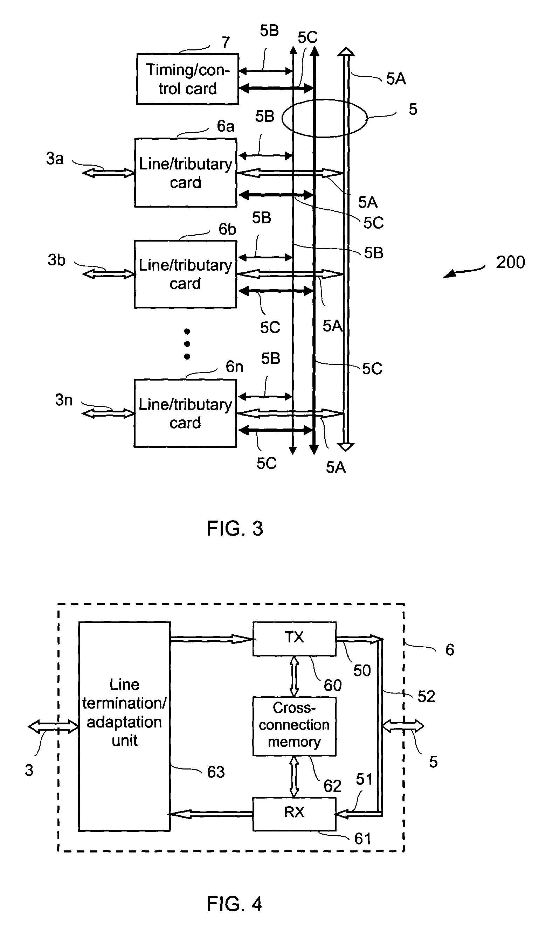

Referring to Fig. 3, in cross-connector 200 according to the invention, the switching matrix has been eliminated and the input/output interfaces 6a...6n (still labelled line/tributary cards in the drawing) are connected to a common bus 5, hereinafter referred to as "matrix bus". Matrix bus 5 is time-shared through all line/tributary cards 6a...6n of the cross-connector, and to this end a proper formatting of the data is necessary, as it will be described below.

Matrix bus 5 contains a number of data lines 5A (shown by the double line arrows), a system clock line 5B (thin line arrows), and a number of control/timing lines 5C (thick line arrows). In general the number of data lines is related to the number of cards 6 connected to the bus and the total bandwidth of the cross-connector. It is however to be appreciated that the principles adopted for the data format on bus 5 remain the same and only a number of parameters are changed based on the specific implementations. In any case, the bus is readily expandable when the need arises.

The clock and the timing and control signals are generated by a timing/control unit 7 (a card or a drawer) and are fed to all line/tributary cards 6, through lines 5B, 5C, in order to set the various phases of access to the bus for the cards themselves.

For improving the protection characteristics, bus 5 could be duplicated. Clearly, duplicating a bus is much less expensive and complex than duplicating a switching matrix (or a RAM) and their connections to a plurality of input/output interfaces

Fig. 4 shows the structure of the generic line/tributary card 6. For sake of simplicity of the drawing, bus 5 is shown as a whole, without separately indicating the data, clock and control lines.

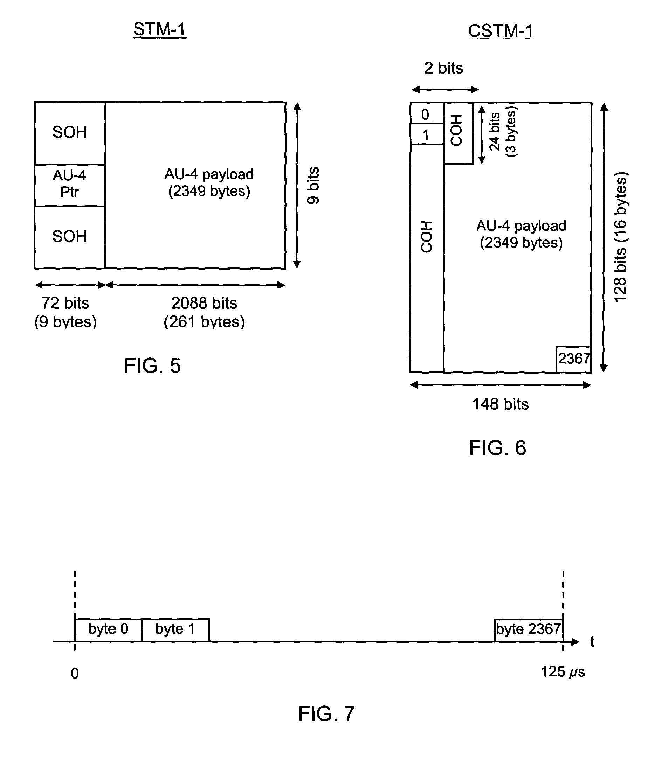

Each line/tributary card 6 is equipped with:
- a matrix bus interface, composed by a transmitter 60 and a receiver 61 and lines 50, 51, 52 for their connection to bus 5 and to each other;
- a memory 62 (referred to in the following as cross-connection memory) containing the information about the cross-connections involving the data paths passing through that card;
- a line termination/adaptation unit 63, performing the usual termination of the modules/virtual containers requested at a node and the reconstruction of the output data streams, and further performing an adaptation function between the incoming data streams and the matrix bus format, as will be discussed with reference to Figs. 5 and 6.

It is to be appreciated that lines 50, 52 and 51 also establish a direct connection between transmitter 60 and receiver 61 in order to allow an on-card handling of data streams the cross-connection of which involves input/output lines 3 of a same card.

As to line termination/adaptation unit 63, three main operations must be performed on the incoming data streams for the adaptation.

The first operation is a partitioning of the incoming data streams into STM-1 format. As known, and as depicted in Fig. 5, an STM-1 includes the so-called Section Overhead (SOH) and a payload corresponding to an administrative unit AU-4. One byte of the SOH is the AU-4 pointer indicating the position of the virtual container VC-4 forming the AU-4 information payload in the STM-1 frame of 125 µs. (We recall that an AU-4 needs not to be contained into a single STM-1 frame).

The second operation is the AU-4 pointer adaptation, from the generic incoming value to a fixed value, typically zero. Such operation is commonly requested also in conventional cross-connectors, and it permits the switching of lower order virtual containers. If this kind of switching is not requested, this operation could be dispensed with.

The third operation concerns the dropping of unused/useless SOH bytes, so that only a required number of SOH bytes will be forwarded to the matrix bus.

As shown in Fig. 6, the format adaptation performed by line termination/adaptation unit 63 converts the STM-1 frame of 9 x 2160 bits (9 rows x 270 columns) into a matrix bus format, referred to in the following as CSTM-1 (compressed STM-1), where the frame includes 128 x 148 bits organised into 16 rows, each corresponding to 1 byte, and 148 columns each 1-bit wide. A CSTM-1 is composed by a CSTM-1 overhead portion (COH), in which a given number of SOH and/or POH bytes can be allocated (POH = Path Overhead, which is the information that, together with a payload, forms a VC-4), and a payload section carrying the VC4-like (AU-4) payload of the STM-1. Overhead portion COH comprises 19 bytes (the first column plus the first three bytes of the second column). The first two bytes (0, 1) and the last byte (2367) of the CSTM-1 are indicated in the Figure.

The choice of the SOH/POH bytes to be introduced into COH may depend on specific user requirements. The bytes that are most commonly used within the cross-connection are, as far SOH is concerned, the so-called DCC channels (i.e. bytes D1, D2 and D3 forming a channel at 3x64 Kbit/s and bytes D4 to D12 forming a channel at 9x64 Kbit/s, which channels are generally used for data communications among the apparatuses), bytes E1, E2 providing orderwire channels for voice communication, and bytes K1, K2 related with protection functions. As far as POH are concerned, the byte of interest is usually byte F2, which provides a channel at 64 Kbit/s, having substantially the same functions of a DCC channel.

Exchanging SOH bytes and/or POH bytes among interfaces 6 via the COH allows performing functions such as DCC/OH/F2... termination, tunnelling, broadcast etc.. Even time reference indication can be extracted from the incoming streams and used for timing source choice, as in any conventional SDH cross-connector.

The CSTM-1 is forwarded bytewise towards the transmitter, as shown in Fig. 7, where a serial transmission is depicted by way of example: in that case, the most significant bit is transmitted first.

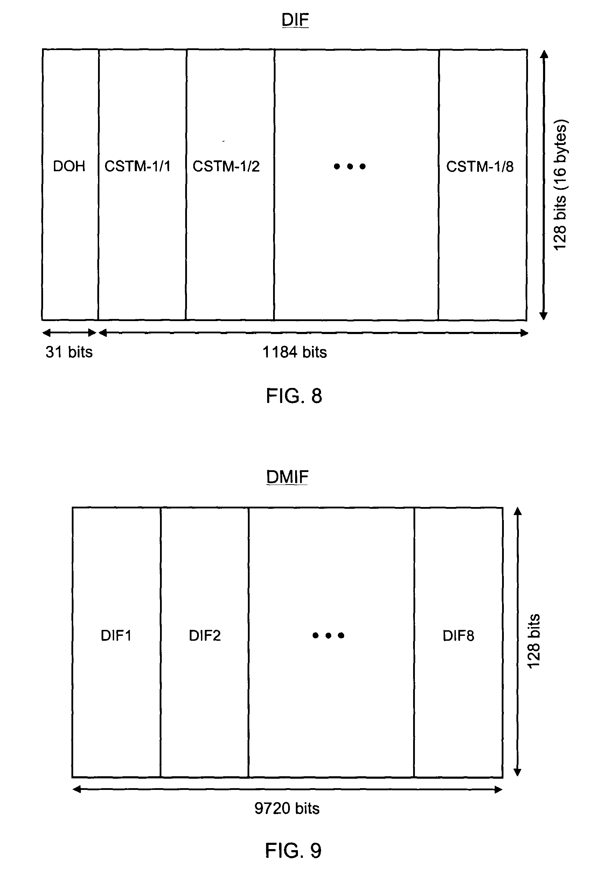

Each interface 6a...6n (Fig. 3) often handles more than one STM-1-like traffic. Thus, an appropriate time-combination of all CSTM-1 belonging to a same card 6 is needed in order they can share the same physical matrix bus interface. Such a combination is obtained by creating, in unit 63, a new multiplexing level, referred to in the following as DIF (drawer interface format). As shown in Fig. 8, a DIF frame includes an overhead section of 16 x 31 bytes, referred to as drawer overhead and shortly indicated as DOH in the following, and a payload section containing the concurrent CSTM-1 frames (i. e. the frames present in the same period of 125 µs) of the whole card 6. The overall size of the DIF thus depends on the number of STM-1 flows handled by the card. The drawing refers by way of example to the case of 8 flows, so that the whole DIF includes 1215 columns (148 x 8 + 31).

The main function of DOH is to provide a guard time between the end of the transmission from one card and the beginning of the transmission from the next card, This is necessary to prevent a bus access conflict, that is the simultaneous writing access by two cards. In practice, DOH will include a portion corresponding to a silence period of the concerned card, followed by an activation code informing the other cards of the identity of the transmitting card: in this manner, a card failure can be detected because of the lack of reception of the expected activation code. The time allotted to drawer overhead DOH is used by each card to initialise the transmission phase on the matrix bus, while the receiver can align itself to the transmitter.

The CSTM-1 frames within a DIF frame could be time-interleaved or not. The drawing refers to the case in which no interleaving is performed.

The DIF frames from the individual interfaces are then time-multiplexed on bus 5, thereby creating an overall frame structure referred to in the following as DMIF (distributed matrix interface format), shown in Fig. 9 for the exemplary cases in which eight cards 6 are provided. Also a DMIF frame has therefore a capacity depending on the number of cards 6. The DMIF frame is divided into time slots, each assigned to a single card 6. During the associated time slot, each card transmits one DIF frame on matrix bus 5 and listens during the whole time. Transmission of a DMIF frame over the bus will follow the same rules adopted for transmission of a CSTM-1. The transmitter allocates each byte of the incoming data streams on data lines 5A of matrix bus 5. An exception can be a cross-connection between two data streams incoming to and outgoing from the same card 6, when no transfer onto matrix bus 5 is required, but an "on-card" cross-connection is performed, as stated before. The information about which streams are to be processed on the card is provided by cross-connection memory 62.

Similarly, each receiver 61 can read from cross-connection memory 62 the time instants in which bytes to be allocated on its output streams are present on bus 5. The bytes read are then fed to line termination/adaptation unit 63 for building of the output streams. This will take place like in interfaces 2a...2n of a conventional cross-connector and thus no detailed description is needed.

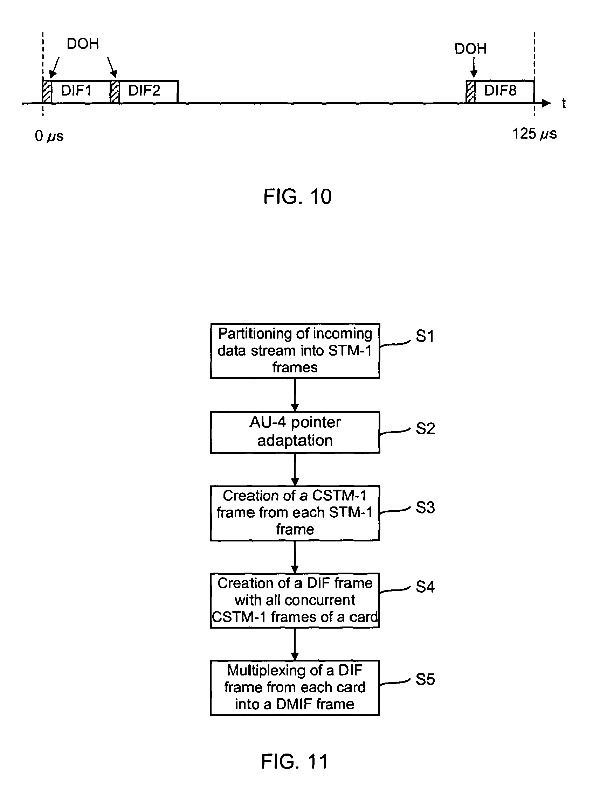

The arrangement of a DMIF frame on the time axis is shown in fig. 10, again assuming a serial transmission. The Figure clearly shows the separation between the data of adjacent DIFs obtained through the DOHs.

Advantageously however DIF frames are forwarded to the bus in parallel, e.g. with a 128-bit parallelism. Any other parallelism degree can however be adopted. Being the mapping between incoming and outgoing streams of the cross-connector fixed for a given programming of the cross-connector itself, a receiver 61 knows also from which data lines it has to take the bytes of interest.

At the end of every DMIF frame cycle, all cards 6 have sent all of their CSTM-1 frames and have read back all bytes to fill the outgoing data stream frames.

The operations described above for writing the data of the incoming streams onto the bus are also shown in flow-chart form in Fig. 11. The steps of the flow chart are immediately apparent in view of the above description. In particular steps S1 to S3 correspond to the three operations performed by adaptation unit 63 for passing from a first data format used for data transport over lines 3 to the bus matrix format CSTM-1; step S4 is the multiplexing of the CSTM-1 frames of a card 6 into the drawer interface format DIF, and step S5 is the multiplexing of the DIF frames into the DMIF frame on the bus.

The operations at the reading side are conventional, as said above, and hence they do not need a specific description.

Thus, the invention offers a different approach to the implementation of the switching function. Thanks to the provision of a cross-connection memory 62 on each card, the matrix function is split on the line/tributary cards incoming to the cross-connector and is implemented through a proper formatting of the interface data streams. The present invention thus reduces the risks related to a cross-connector. Part of the protection mechanism is embedded in the architecture, and can be further ensured by duplicating matrix bus 5, which is much less complex and expensive than duplicating the matrix and all the cards-to-matrix connections as in conventional cross-connectors. No physical matrix fault is possible as no physical matrix drawer/card/chipset exists any longer. Dispensing with the matrix hardware also affords a significant reduction of the overall costs. Use of a bus also allows a great flexibility, since it can be modularly expanded for adaptation to a node expansion. The bus modularity also allows an only partial duplication. The same advantages are achieved also with respect to use of a RAM.

It is evident that the above description has been given by way of non-limiting example and that changes and modifications are possible without departing from the scope of the invention. So, the cross-connector could operate at a multiplexing level other than the STM-1. Moreover, even if a cross-connector for SDH/SONET streams has been described in detail, the invention can be applied in general in any apparatus which receives data streams coming from different interfaces, combines their contents in a predetermined manner and sends the resulting data streams to said interfaces upon a suitable switching. Examples could be a router, an Ethernet-switch, a hub and so on. This means that, even if the format of the incoming/outgoing data streams has been assumed to be similar or identical to an STM-N format, as described in ITU-G.707 and related standards, other data format could be handled as well.

## Claims

1. An apparatus for receiving digital data streams from a plurality of interfaces (6a...6n) each handling one or more incoming/outgoing streams, combining their contents in predetermined manner, and sending the resulting data streams, after a switching thereof, to said interfaces (6a...6n), **characterised in that** said interfaces (6a...6n) are all connected to a common bus (5) time shared among said input/output interfaces (6a...6n).

2. The apparatus as claimed in claim 1, **characterised in that** it further comprises a timing and control unit (7), also connected to said bus (5), to supply each interface (6a...6n) with timing and control signals establishing a fixed and predetermined bus access criterion for the different interfaces (6a...6n).

3. The apparatus as claimed in claim 1 or 2, **characterised in that** each interface (6a...6n) comprises:
- adaptation means (63) for partitioning a stream incoming to the interface (6a...6n) into first data blocks (STM-1) having a first format and converting said first data blocks (STM-1) into second data blocks (CSTM-1) having a second format used for transmission over said bus (5);
- a transmitter (60), for forwarding second data blocks to said bus (5) at instants determined by said timing and control unit (7);
- a memory (62) containing information about the cross-connections involving the data streams handled by said interface (6a...6n);
- a receiver (61) for extracting from said bus (5), based upon the cross-connection information contained in said memory (62), data to be inserted into the output streams.

4. The apparatus as claimed in claim 3, **characterised in that** a direct connection (50, 52, 51) between said transmitter (60) and said receiver (61) is provided, for handling internally of an interface (6a...6n) streams whose cross-connection involves said interface (6a...6n) only.

5. The apparatus as claimed in claim 4, **characterised in that** said adaptation means (63) are arranged to insert concurrent second data blocks (CSTM-1/1...C-STM1/8) of different streams incoming to an interface (6a...6n) into a third data block (DIF) including all of said concurrent data blocks (CSTM-1/1...C-STM1/8) as payload, and including also an interface overhead (DOH) implementing a guard time intended to separate transmissions by different interfaces (6a...6n) over said bus (5).

6. The apparatus as claimed in claim 5, **characterised in that** said adaptation means (63) are arranged to build said interface overhead (DOH) with a first portion representing a silence period of the respective interface (6a....6n) and with a second portion representing an activation code informing the other interfaces (6a...6n) of the identity of the transmitting interface (6a...6n).

7. The apparatus as claimed in claim 5 or 6, **characterised in that** said adaptation means (63) are arranged to interleave the contents of the second data blocks (CSTM-1/1...C-STM1/8) inserted into a third data block (DIF).

8. The apparatus as claimed in any of claims 5 to 7, **characterised in that** the transmitter (60) of each said interface (6a....6n) is arranged to access said bus (5), for transmission of a respective third data block (DIF1...DIF8), in a respective time slot of a frame (DMIF) including a time slot for each said interface (6a....6n).

9. The apparatus as claimed in any of claims 5 to 8, **characterised in that** the receiver (60) of each interface (6a....6n) is arranged to monitor said bus (5) for the whole duration of the frame, for reading the data bytes to be inserted into the output streams.

10. The apparatus as claimed in any preceding claim, **characterised in that** it is a cross connector (200) for digital streams conforming to the Synchronous Digital Hierarchy/SONET standards.

11. The apparatus as claimed in claim 10, **characterised in that** said adaptation means (63) are arranged to perform a partitioning of the incoming streams into STM-1 frames.

12. The apparatus as claimed in claim 11, **characterised in that** said adaptation means (63) are arranged to build second data blocks (CSTM-1) including a payload consisting of the payload of a corresponding STM-1 frame, and an overhead portion (COH) including preselected bytes of a section overhead of the STM-1 frame and, possibly, preselected bytes of a path overhead of a top level virtual container contained in the payload of said STM-1 frame.

13. The apparatus as claimed in claim 12, **characterised in that** said adaptation means (63) are arranged to set a pointer (AU-4 Ptr) belonging to the section overhead and indicating the beginning of the payload in an STM-1 frame to a fixed value allowing switching of lower order virtual containers.

14. The apparatus as claimed in any preceding claim, **characterised in that** said bus (5) is at least partially duplicated.

15. A method of cross-connecting data between digital streams incoming to and outgoing from a plurality of input/output interfaces (6a...6n) of a cross-connector (200), **characterised in that** it comprises the steps of:
- providing a bus (5) connected to and time shared among said interfaces (6a...6n);
- building, on said bus, a periodically repeating frame (DMIF) having a time slot for each interface (6a...6n);
- transmitting from each interface (6a...6n) onto said bus (5), during the time slot allotted to said interface (6a...6n), concurrent data blocks of one or more streams incoming to the interface (6a...6n); and
- reading from said bus (5) and loading into each interface (6a...6n), during the respective time slot, data bytes to be inserted into streams outgoing from said interface (6a...6n).

16. The method as claimed in claim 15, **characterised in that** it comprises a direct transmission, from a transmitter (60) to a receiver on a bus side of an interface (6a...6n), of data to be cross-connected between streams incoming to and outgoing from said interface (6a...6n).

17. The method as claimed in claim 15, **characterised in that** said step of providing a bus includes providing an at least partially duplicated bus (5).

18. The method as claimed in any of claims 15 to 17, **characterised in that** said building step comprises:
- partitioning (S1) an input stream into first data blocks (STM-1) having a first format and containing a payload and overhead information;
- converting (S3) each of said first data blocks (STM-1) from said first format to a second format used for transmission over said bus (5), to obtain second data blocks (CSTM-1) including the payload of a corresponding first data block (STM-1) and an overhead section comprising part of the overhead information contained in said corresponding first data block (STM-1);
- inserting concurrent second data blocks (CSTM-1/1...C-STM1/8) of all streams incoming to an interface (6a...6n) into a third data block (DIF) including all of said concurrent second data blocks (CSTM-1/1...C-STM1/8) as payload, and including also an interface overhead (DOH) providing a guard time intended to separate transmissions by different interfaces (6a...6n) over said bus (5); and
- time division multiplexing concurrent third data blocks (DIF1...DIF8) from all interfaces (6a...6n) into a common frame (DMIF).

19. The method as claimed in claim 18, **characterised in that** said insertion step comprises interleaving the bytes of the second data blocks (CSTM-1/1...C-STM1/8) inserted into a third data block (DIF).

20. The method as claimed in claim 18 or 19, **characterised in that** said insertion step comprises building said interface overhead (DOH) with a first portion representing a silence period of the respective interface (6a....6n) and a second portion representing an activation code informing the other interfaces (6a...6n) of the identity of the transmitting interface (6a...6n).

21. The method as claimed in any of claims 15 to 19, **characterised in that** said streams are streams conforming to the Synchronous Digital Hierarchy/SONET standards, and said partitioning step partitions said stream into STM-1 frames.

22. The method as claimed in claim 21 when referred to claim 18, **characterised in that** said conversion step provides for inserting into the overhead section (COH) of a second data block (CSTM-1) preselected bytes of a section overhead (SOH) of an STM-1 frame and, possibly, preselected bytes of a path overhead of an highest order virtual container contained in said payload.

23. The method as claimed in claim 22, **characterised in that** it further comprises the step of setting a pointer (AU-4 Ptr) in the section overhead indicating the beginning of the payload in an STM-1 module to a predetermined value allowing switching virtual containers of lower multiplexing level.
